# EUROPÄISCHE PATENTSCHRIFT

(11) **EP 2 230 494 B1**
(45) Veröffentlichungstag und Bekanntmachung des Hinweises auf die Patenterteilung: **09.11.2016**
(21) Anmeldenummer: 09155193.7
(22) Anmeldetag: 16.03.2009
(51) Int. Cl.: G01G 21/28

(54) **Waage**
Scales
Balance

(43) Veröffentlichungstag der Anmeldung: 22.09.2010
(73) Patentinhaber: Mettler-Toledo GmbH, 8606 Greifensee (CH)
(72) Erfinder: Lüchinger, Paul, 8610, Uster (CH); Lüdi, Beat, 8633, Wolfhausen (CH)
(74) Vertreter: Mettler-Toledo

(56) Entgegenhaltungen:
- EP-A- 1 396 711
- DE-A1- 10 031 415
- US-A- 4 465 152

## Beschreibung

Die vorliegende Erfindung betrifft Waagen mit einem Waagengehäuse, einer Waagschale, einen den Waagschale umgebenden Wägeraum, einen den Wägeraum umschliessenden Windschutz, einer Waagenelektronik, einer unterhalb der Waagschale angeordneten Wägezelle und eine den Wägezelle umgebenden Zellenraum.

Diese Waagen werden vor allem zum Wiegen von kleinen Massen verwendet. Sie werden vorzugsweise im Labor verwendet und es werden hohe Anforderungen hinsichtlich der Auflösung gestellt. Da die zu wägenden Massen klein sind, können selbst kleine Umgebungsfaktoren zu Ungenauigkeiten führen. Die zulässige Höchstlast befindet sich üblicherweise im Bereich von 3 bis 50 Gramm, wobei der Teilungswert meist kleiner als das 10⁻⁷ fache der Höchstlast beträgt.

Bei diesen Waagen können selbst kleine Umgebungseinflüsse, wie zum Beispiel Druckschwankungen in der Umgebungsluft einen Einfluss auf das Messresultat haben. Diese Druckschwankungen können dazu führen, dass im Wägeraum ein anderer Druck als im Zellenraum auftritt. Ein Druckausgleich erfolgt durch eine Luftströmung über die Verbindung der im Wägeraum angeordneten Waagschale und der im Zellenraum angeordneten Wägezelle. Diese Luftströmung kann zu einem Auf- bzw. Abtrieb der Waagschale führen, was zu Ungenauigkeiten führt. Um diese Ungenauigkeit zu vermeiden, sind im Stand der Technik Waagen bekannt, welche eine zusätzliche Öffnung zwischen dem Zellenraum und dem Wägeraum aufweisen um einen Druckausgleich zwischen dem Wägeraum und dem Zellenraum zu ermöglichen ohne einen Auf- bzw. Abtrieb auf die Waagschale zu verursachen.

Beispielsweise aus US 4465152 ist eine Waage bekannt, die eine gasdurchlässige Öffnung zwischen dem Zellenraum und dem Wägeraum aufweist. Diese Öffnung befindet am Boden des Wägeraums. Dadurch kann Luft vom Zellenraum durch den Boden des Wägeraums strömen. Diese Luftströmungen können einen Auf- bzw. Abtrieb auf die Waagschale verursachen und können zu Ungenauigkeiten führen.

Auch die Wärmeverteilung in der Waage während des Betriebs kann einen Einfluss auf die Genauigkeit haben. Insbesondere die Abwärme der Waagenelektronik beeinflusst die Wärmeverteilung. Bei vielen Waagen ist sowohl die Wägezelle als auch die Waagenelektronik in einem unter dem Wägeraum angeordnetem Zellenraum oder unterem Gehäuseteil angebracht. Dadurch dass die Waagenelektronik unter dem Wägeraum angeordnet ist entsteht das Problem, dass die Verlustwärme der Waagenelektronik den Zellenraum aufheizen kann. Dies geschieht zum Beispiel dadurch, dass über eine Wand zwischen dem Zellenraum und dem Wägeraum die Luft im unteren Bereich des Wägeraums erwärmt wird. Auf Grund der Konvektion strömt die wärmere Luft aus dem unteren Bereich des Wägeraums nach oben und es kommt zu Luftströmungen im Wägeraum. Diese Luftströmungen führen zu Ungenauigkeiten des Messresultates und es gilt diese zu vermeiden.

Eine mögliche Lösung diese Luftströmungen zu vermeiden, ist das Auslagern der Waagenelektronik aus dem unteren Gehäuseteil.

Bei einigen Waagen, welche auf dem Markt angeboten werden, wurde dies dadurch realisiert, indem die Elektronik aus dem Waagegehäuse in einem separaten Gehäuse ausgelagert wird. Durch die Unterbringung der Elektronik in dem separaten Gehäuse wird eine thermische Trennung sichergestellt und die Abwärme der Waagenelektronik kann nicht mehr den Wägeraum aufheizen. Das separate Gehäuse benötigen jedoch mehr Platz, was gerade bei Laboren mit beschränktem Platzangebot nachteilig ist. Bei anderen Waagen, ist die Waagenelektronik in einen seitlichen Gehäuseteil der Waage angeordnet, wodurch Erwärmung des Zellenraums reduziert wird.

Bei der in US 6 713 690 B2 offenbarten Waage, wird das Auslagern der Waagenelektronik aus dem unteren Gehäuseteil dadurch realisiert, indem die Anzeigeeinheit und Waagenelektronik in einem separaten Gehäuseteil kombiniert werden. Durch eine vertikale Platte zwischen diesem separaten Gehäuseteil und dem Waagengehäuse wird sichergestellt, dass die Strahlungswärme der Waagenelektronik möglichst keinen Einfluss auf den Wägeraum ausüben kann. Für das Verbindungskabel zwischen dem separaten Gehäuseteil und dem Waagengehäuse wird ein Material mit schwacher Wärmeleitfähigkeit gewählt, wodurch der Wärmetransport zwischen dem separaten Gehäuseteil und dem Waagengehäuse zusätzlich reduziert wird. Diese Anordnung hat den Nachteil, dass sie komplex ist und zusätzliche Bauteile, wie zum Beispiel die vertikale Platte benötigt.

Es hat sich gezeigt, dass es vorteilhaft ist wenn die Lufttemperatur im oberen Bereich des Wägeraum höher ist als im unteren, da dadurch eine stabile Luftschichtung vorliegt bei der weniger das Messergebnis negativ beeinflussende Luftströmungen entstehen können.

In DE 100 31 415 A1 werden verschiedene Ausführungsformen gezeigt, die diese stabile Luftschichtung sicherstellen. In einer Ausführungsform wird im oberen Bereich des Wägeraums eine Heizung zum Aufheizen der Luft angebracht. In einer weiteren Ausführungsform ist der untere und der obere Bereich des Wägeraums mit Hilfe eines vertikalen Rohrs verbunden. An diesem Rohr sind Mittel zur Erzeugung eines aufwärts gerichteten, erwärmten Luftstroms mit einem kleinen Querschnitt angebracht. Nachteilig bei diesen Ausführungsformen ist die zusätzliche Verwendung von Bauteilen. Ausserdem verursacht der Luftstrom mit kleinem Querschnitt eine lokale starke Störung in der Luft im Wägeraum, was zu Ungenauigkeiten des Messresultats führen kann.

Aufgabe der Erfindung ist es eine kompakte Waage zur Verfügung zu stellen, bei der auf möglichst einfache Weise im Betrieb eine stabile Luftschichtung im Wägeraum erreicht werden kann.

Diese Aufgabe wird mit einer Waage gelöst, welche die im unabhängigen Patentanspruch angegebenen Merkmale aufweist. Weitere vorteilhafte Ausführungsformen können den abhängigen Ansprüchen entnommen werden.

Die erfindungsgemässe Waage weist ein Waagengehäuse, eine Waagschale, einen die Waagschale umgebenden Wägeraum, einen den Wägeraum umschliessenden Windschutz, eine Waagenelektronik, eine unterhalb der Waagschale angeordneten Wägezelle und einen den Wägezelle ungebenden Zellenraum auf. Dabei ist der Zellenraum über einen Hohlraum mit dem oberen Drittel des Wägeraums gasdurchlässig verbunden und die Waagenelektronik ist an der Rückwand ausserhalb des Wägeraums angeordnet.

Bei dieser Anordnung ist ein Druckausgleich zwischen Wägeraum und Zellenraum über den Hohlraum ermöglicht. Durch die Verbindung des Hohlraums mit dem oberen Drittel des Wägeraums wird die unter Umständen wärmere Luft aus dem Zellenraum direkt in das obere Drittel des Wägeraums geleitet. Dadurch werden Luftströmungen im Wägeraum verringert. Zusätzlich wird durch die Auslagerung der Waagenelektronik aus dem Zellenraum in oder an einen seitlichen Gehäuseteils eine Erwärmung des Zellenraums verringert. Bei dieser Anordnung werden besonders abwärmeintensive Bauteile nicht im Zellenraum sondern im seitlichen Gehäuseteil untergebracht. Auf diese Weise kann sich der Zellenraum weniger stark erwärmen, wodurch eine Erwärmung der Luft im unteren Bereich des Wägeraums über die Trennwand zwischen Zellenraum und Wägeraum klein gehalten wird. Es ist nicht möglich alle elektronischen Bauteile aus dem Zellenraum zu entfernen, da einige elektronische Bauteile direkt mit der Wägezelle verbunden sein müssen. Darunter fällt zum Beispiel die Wägespule, der A/D Wandler oder der Positionsgeber.

Besonders vorteilhaft ist bei dieser Anordnung zum Einen, dass die Umströmung der Waagschale vermieden wird und zum Anderen, dass eine höhere Temperatur im oberen Bereich des Wägeraums begünstigt wird. Dadurch wird eine stabile Temperaturverteilung mit geringen Luftströmungen sichergestellt, wodurch verfälschender Auf- oder Abtrieb der Waagschale vermieden wird.

Vorteilhafterweise wird ein Teil des Windschutzes durch eine feststehende Rückwand gebildet und der Hohlraum ist an dieser Rückwand angeordnet. Dadurch wird der Hohlraum auf einfache und kompakte Weise in die Waage integriert.

Um vor allem die Erwärmung des unteren Bereichs des Wägeraums zu vermindern ist es vorteilhaft, den seitlichen Gehäuseteil vom Zellenraum mit Hilfe einer thermischen Trennung zu trennen. Für diese thermische Trennung wird idealerweise der Hohlraum derart zwischen der Waagenelektronik und Wägeraum angeordnet, dass die sich im Hohlraum befindende Luft durch die Abwärme der Waagenelektronik beheizbar ist und über diese erwärmte Luft Wärme in den Wägeraum abgebbar ist. Auf diese Weise wird der Wägeraum über die Rückwand beheizt. Die erwärmte Luft im Wägeraum strömt auf Grund von Konvektion entlang der beheizten Rückwand in den oberen Bereich des Wägeraums. Dadurch stellt sich im oberen Bereich des Wägeraums eine höhere Temperatur ein als im unteren Bereich des Wägeraums, wobei die Strömungsgeschwindigkeiten klein sind und es zu vernachlässigbar kleinen Einflüssen auf die Waagschale kommt. Dieser Effekt wird noch verstärkt, wenn stark wärmeabstrahlende Elemente der Waagenelektronik im oberen Bereich der Waagenelektronik angeordnet sind. Ferner kann im oberen Bereich des Wägeraums auch eine zusätzliche Heizung vorgesehen werden.

Besonders vorteilhaft ist es, wenn der Hohlraum eine im Wesentlichen parallel zur Rückwand verlaufende Wand aufweist und die Waagenelektronik an dieser Wand angeordnet ist. Idealerweise erstreckt sich der Hohlraum über mindestens die Hälfte der horizontalen Erstreckung der Rückwand und über mindestens zwei Drittel der vertikalen Erstreckung der Rückwand. Auf diese Weise wird eine grosse Kontaktfläche für den Wärmetransport zur Verfügung gestellt. Eine besonders grosse Kontaktfläche wird zur Verfügung gestellt, wenn sich der Hohlraum über die gesamte vertikale Erstreckung der Rückwand erstreckt.

In einer bevorzugten Ausführungsform ist der Hohlraum im Wesentlichen nur zum Zellenraum und zum Wägeraum offen. Somit gibt es im Wesentlichen keinen Luftaustausch zwischen dem Hohlraum und den restlichen Waagenteilen bzw. der Umgebungsluft. Auf diese Weise kann sich innerhalb des Hohlraums eine stabile Wärmeverteilung ausbilden. Um den Luftaustausch zwischen dem Hohlraum und dem oberen Bereich des Wägeraums sicher zu stellen, weist der Hohlraum im oberen Drittel mindestens eine Öffnung zum Wägeraum auf.

Alternativ weist die Waage einen oberen Gehäuseteil auf und der Wägeraum ist über diesen oberen Gehäuseteil mit dem Hohlraum verbunden. Bei dieser Ausführungsform wird die erwärmte Luft von oben in den Wägeraum eingebracht, was zu einer stabilen Luftschichtung im Wägeraum führt.

Die Waagenelektronik kann auch ausserhalb des Waagengehäuses angeordnet sein. Idealweise ist die Waagenelektronik am Waagengehäuse angeordnet. Durch diese Anordnung wird eine thermische Trennung der Waagenelektronik vom Wägeraum sichergestellt.

Durch Abstandhalter zwischen der Waagenelektronik und dem seitlichen Gehäuseteil kann ebenfalls eine thermische Isolation der Waagenelektronik vom Wägeraum sichergestellt werden. Idealerweise sind die Abstandhalter zumindest teilweise aus einem thermisch schlecht leitenden Material, wie z.B. Kunststoff gefertigt.

Auch ein Hohlraum zwischen Zellen- und Wägeraum kann der thermischen Isolation des Zellenraums vom Wägeraum dienen. Dabei kann dieser Hohlraum sowohl geschlossen sein, als auch Öffnungen zum Wägeraum und/oder Zellenraum aufweisen.

Auch eine Strömung der Umgebungsluft zwischen der Waagenelektronik und dem Hohlraum dient einer thermischen Trennung der Waagenelektronik vom Wägeraum.

Bei einer besonders vorteilhaften Ausführungsform ist die Waagenelektronik mit mindestens einer Anschlussstelle verbunden, wobei die Anschlussstelle in einem Winkel *a* von 15° - 75 ° zu einer vertikalen Ebene zur Rückwand angeordnet ist. Die Anschlussstelle kann beispielsweise eine Buchse, eine Steckerleiste oder eine Anschlussklemme sein.

Die Anschlussstelle kann dem Anschluss an eine Stromversorgung, dem Transfer des Wägesignals und/oder der Verbindung an Peripheriegeräte wie z.B. einem Drucker dienen. Auf diese Weise ist die Anschlussstelle für den Benutzer leichter zugänglich und vereinfacht das Ein- und Ausstecken eines Steckers in die Anschlussstelle. Ein weiterer Vorteil besteht darin, dass mit der abgewinkelten Anschlussstelle die Waage näher an der Wand platziert werden kann, was vor allem bei einem beschränkten Platzangebot im Labor vorteilhaft ist.

Die erfindungsgemässe Waage wird anhand von Ausführungsformen, wie sie schematisch in den Zeichnungen dargestellt sind, im Folgenden beschrieben. Es zeigen
- Figur 1: einen Querschnitt durch eine erste Ausführungsform der erfindungsgemässen Waage;
- Figur 2: einen Querschnitt durch eine zweite Ausführungsform der erfindungsgemässen Waage und
- Figur 3: einen weiteren Querschnitt durch die zweite Ausführungsform der erfindungsgemässen Waage.

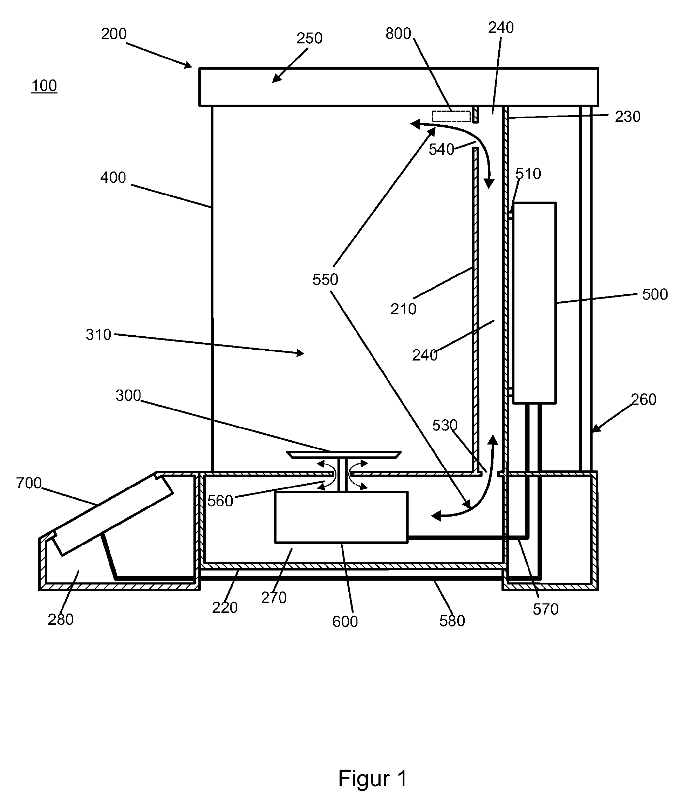

Figur 1 zeigt eine erste Ausführungsform der erfindungsgemässen Waage 100 mit einem Waagengehäuse 200, einer Waagschale 300, einen den Waagschale 300 umgebenden Wägeraum 310, einen den Wägeraum 310 umschliessenden Windschutz 400, einer unterhalb der Waagschale 300 angeordneten Wägezelle 600 und einen den Wägezelle 600 umgebenden Zellenraum 270.

Das Waagengehäuse 200 besteht aus einem unteren Gehäuseteil 220, welches unter dem Wägeraum 310 angeordnet ist, einem oberen Gehäuseteil 250 welches über dem Wägeraum 310 angeordnet ist und einem seitlichem Gehäuseteil 260 welches seitlich vom Wägeraum 310 angeordnet ist. Der Zellenraum 270 ist ein Teil des unteren Gehäuseteils 270.

Die Waage 100 weist eine Anzeige- und Bedieneinheit 700 auf, die der Bedienung der Waage 100 und der Anzeige der Messergebnisse dient. Die Anzeige- und Bedieneinheit 700 kann am oder im unteren Gehäuseteil 220 angeordnet sein. Idealerweise wird die Anzeige- und Bedieneinheit 700 an oder in einem separaten Anzeigengehäuse 280 angebracht. Dieses Anzeigengehäuse 280 ist ein Teil des unteren Gehäuseteils 220. Es ist jedoch auch möglich die Anzeige- und Bedieneinheit 700 an oder in einem anderen Teil des Waagengehäuses 200 anzuordnen oder sie getrennt vom Waagengehäuse 200 anzuordnen.

Die Waage 100 weist eine Waagenelektronik 500 zur Verarbeitung des Wägesignals der Wägezelle 600 der Waage 100 auf. Diese Waagenelektronik 500 ist durch eine erste Datenleitung 570 mit der Wägezelle 600 und durch eine zweite Datenleitung 580 mit der Anzeige- und Bedieneinheit 700 verbunden. In einer möglichen Ausführungsform wird ein Teil der zweiten Datenleitung 580 unterhalb des unteren Gehäusesteils 220 geführt. Es ist jedoch möglich die Datenleitungen 570, 580 beliebig innerhalb und ausserhalb des Gehäuses zu führen.

Der Wägeraum 310 wird von einem Windschutz 400 umschlossen. Ein Teil des Windschutzes 400 wird dabei durch eine seitlich angeordnete Rückwand 210 gebildet. An dieser Rückwand 210 ist die Waagenelektronik 500 angeordnet. Zwischen der Rückwand 210 und der Waagenelektronik 500 ist eine Zwischenwand 230 derart angeordnet, dass zwischen der Rückwand 210 und der Zwischenwand 230 ein Hohlraum 240 gebildet ist. Die Zwischenwand 230 ist im Wesentlichen parallel zur Rückwand 210 angeordnet und die Zwischenwand 230 erstreckt sich idealerweise über mindestens der Hälfte der horizontalen Ausstreckung der Rückwand 210. Zur thermischen Isolation können zwischen der Zwischenwand 230 und der Waagenelektronik 500 Abstandhalter 510 aus thermisch schlecht leitendem Material angeordnet sein.

Der Zellenraum 270 ist über den Hohlraum 240 mit dem oberen Bereich des Wägeraums 310 verbunden. Dazu ist zwischen dem Zellenraum 270 und dem Hohlraum 240 mindestens eine Öffnung 530 vorhanden durch die Luft strömen kann. Ausserdem ist zwischen dem Hohlraum 240 und dem Wägeraum 310 ebenfalls eine Öffnung vorhanden durch die Luft strömen kann. Es ist dabei wichtig, dass sowohl die Öffnung 530 zwischen dem Zellenraum 270 und dem Hohlraum 240 als auch die Öffnung 540 zwischen dem Hohlraum 240 und dem Wägeraum 310 genügend gross ist. Die Öffnungen 530, 540 sind dann genügend gross, wenn der Druckverlust über diese Öffnungen 530, 540 wesentlich kleiner ist als über die Verbindung von der Waagschale 300 und der Wägezelle 600. Dadurch wird sichergestellt, dass die Luft bevorzugterweise durch die Öffnungen 530, 540 strömt. Dadurch wird eine Umströmung der Waagschale 300 vermieden, wodurch der Auf- bzw. Abtrieb der Waagschale 300 ebenfalls klein gehalten wird. Somit ist die Luftströmung 560 zwischen dem Zellenraum 270 und dem Wägeraum 310 kleiner als die Luftströmung 550, die vom Zellenraum 270 über den Hohlraum 240 in den Wägeraum 310 verläuft.

Die durch die an der Wägezelle 600 angebrachten Elektronikteile erwärmte Luft strömt ferner durch diese Anordnung vom Zellenraum 270 über den Hohlraum 240 in einen oberen Bereich des Wägeraums 310. Die Luft wird zusätzlich durch die am Hohlraum 240 angeordneten Waagenelektronik 500 erwärmt. Dadurch ergibt sich im oberen Bereich des Wägeraums 310 eine höhere Temperatur als im unteren Bereich des Wägeraums 310. Diese Wärmeschichtung ist besonders stabil und wirkt sich positiv auf die Genauigkeit des Messresultats aus. Durch eine zusätzliche Heizung 800 im oberen Bereich des Wägeraums 310 kann dieser Effekt zusätzlich verstärkt werden.

Als oberer Bereich des Wägeraums 210 wird das obere Drittel des Wägeraums 210 und als unterer Bereich des Wägeraums 210 wird das untere Drittel des Wägeraums 210 verstanden.

Die Öffnungen 530, 540 können unterschiedliche Formen aufweisen. Mögliche Formen können z.B. kreisförmige oder ovale Löcher, Schlitze oder eine Perforation sein. Sollte die Öffnung 540 zwischen Wägeraum 310 und Hohlraum 240 in der Rückwand 210 angeordnet sein, so kann die Öffnung 540 z.B. die Form eines durchbrochenen Schriftzugs aufweisen, der für Werbezwecke verwendet werden kann.

Oberhalb des Wägeraums 310 ist ein oberer Gehäuseteil 250 angeordnet. Ein Teil des Windschutzes 400 wird durch den oberen Gehäuseteil 250 gebildet.

Im Rahmen der Erfindung ist es für den Fachmann offensichtlich, dass auch der Hohlraum 240 auch anders ausgestaltet sein kann um den Zellenraum 270 mit dem oberen Drittel des Wägeraums 310 zu verbinden.

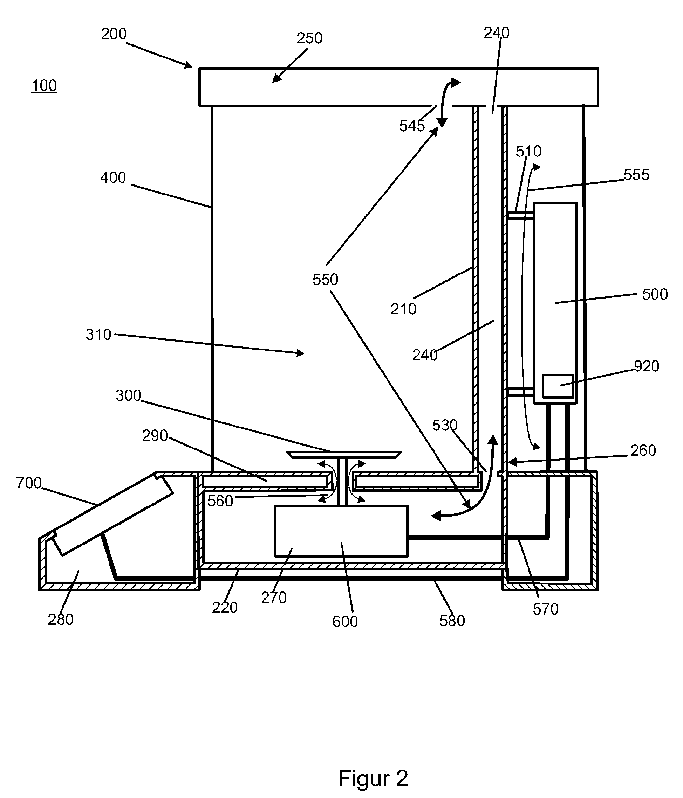

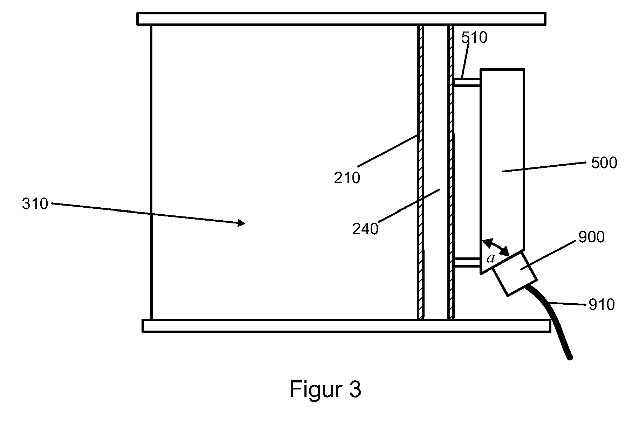

Figuren 2 und 3 zeigen eine zweite Ausführungsform der erfindungsgemässen Waage. Gleiche Bauteile wurden mit gleichen Bezugszeichen versehen. Die zweite Ausführungsform unterscheidet sich von der ersten Ausführungsform durch eine veränderte Verbindung des Zellenraums 270 mit dem Wägeraum 310 durch den Hohlraum 240. Diese zweite Ausführungsform weist einen oberen Gehäuseteil 250 auf. Der Hohlraum 240 weist eine Öffnung 240 zu diesem oberen Gehäuseteil 250 auf und der obere Gehäuseteil 250 weist eine Öffnung 545 zum oberen Bereich des Wägeraums 310 auf.

Des Weiteren ist bei dieser Ausführungsform die Waagenelektronik 500 ausserhalb des seitlichen Gehäuseteils 260 angeordnet. Zur thermischen Isolation der Waagenelektronik 500 vom Wägeraum 310, sind zwischen der Waagenelektronik 500 und dem seitlichem Gehäuseteil 260 Abstandhalter 510 vorgesehen, die idealerweise aus thermisch schlecht leitendem Material gefertigt sind. Eine Strömung 555 der Umgebungsluft zwischen der Waagenelektronik 500 und dem seitlichem Gehäuseteil 260 dient der thermischen Isolation der Waagenelektronik 500 vom Wägeraum 310.

Ein Hohlraum 290 zwischen Zellen- 270 und Wägeraum 310 dient der thermischen Isolation des Zellenraums 270 vom Wägeraum 310. Dieser Hohlraum 290 kann abgeschlossen sein. Es ist jedoch auch möglich den Hohlraum 290 mit Öffnungen zum Wägeraum 310 und/oder Zellenraum 270 zu versehen.

Eine Anschlussstelle 920 dient dem Anschluss an eine Stromversorgung, dem Transfer des Wägesignals und/oder der Verbindung an Peripheriegeräte wie z.B. einem Drucker.

Wie aus Figur 3 ersichtlich ist, ist die Waagenelektronik 500 mit der Anschlussstelle 920 verbunden, wobei die Anschlussstelle 920 in einem Winkel *a* von 15° - 75 ° zur Rückwand 210 angeordnet ist.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 100: Waage
- 200: Waagengehäuse
- 210: Rückwand
- 220: Unteres Gehäuseteil
- 230: Zwischenwand
- 240: Hohlraum zwischen Wägeraum und seitlichem Gehäuseteil
- 250: Oberer Gehäuseteil
- 260: Seitlicher Gehäuseteil
- 270: Zellenraum
- 280: Anzeigengehäuse
- 290: Hohlraum zwischen Zellen- und Wägeraum
- 300: Waagschale
- 310: Wägeraum
- 400: Windschutz
- 500: Waagenelektronik
- 510: Abstandhalter
- 530: Öffnung zwischen Zellenraum und Hohlraum
- 540: Öffnung zwischen Wägeraum und Hohlraum
- 545: Öffnung zwischen Wägeraum und oberen Gehäuseteil
- 550: Erste Luftströmung
- 555: Luftströmung der Umgebungsluft zwischen Waagenelektronik und seitlichen Gehäuseteil
- 560: Zweite Luftströmung
- 570: Erste Datenleitung
- 580: Zweite Datenleitung
- 600: Wägezelle
- 700: Anzeige- und Bedieneinheit
- 800: Heizung
- 900: Stecker
- 910: Kabel
- 920: Anschlussstelle

## Patentansprüche

1. Waage (100) mit einem Waagengehäuse (200), einer Waagschale (300), einem die Waagschale (300) umgebenden Wägeraum (310), einen den Wägeraum (310) umschliessenden Windschutz (400) mit einer feststehenden Rückwand (210), einer Waagenelektronik (500), einer unterhalb der Waagschale (300) angeordneten Wägezelle (600) und einem die Wägenzelle (600) umgebenden Zellenraum (270), **dadurch gekennzeichnet, dass**
der Zellenraum (270) über einen Hohlraum (240) mit dem oberen Drittel des Wägeraums (310) gasdurchlässig verbunden ist und die Waagenelektronik (500) an der Rückwand (210) ausserhalb des Wägeraums (310) angeordnet ist.

2. Waage (100) nach Anspruch 1, **dadurch gekennzeichnet, dass** die Rückwand (210) durch eine Wand des Hohlraums (240) gebildet ist.

3. Waage (100) nach einem der vorangehenden Ansprüche, **dadurch gekennzeichnet, dass** zur thermischen Trennung der Hohlraum (240) zwischen dem Wägeraum (310) und der Waagenelektronik (500) angeordnet ist.

4. Waage (100) nach einem der vorangehenden Ansprüche, **dadurch gekennzeichnet, dass** der Hohlraum (240) derart zwischen der Waagenelektronik (500) und dem Wägeraum (310) angeordnet ist, dass die sich im Hohlraum (240) befindende Luft durch die Abwärme der Waagenelektronik (500) beheizbar ist.

5. Waage (100) nach einem der vorangehenden Ansprüche, **dadurch gekennzeichnet, dass** stark wärmeabstrahlende Elemente der Waagenelektronik (500) im oberen Bereich der Waagenelektronik (500) angeordnet sind.

6. Waage (100) nach einem der vorangehenden Ansprüche, **dadurch gekennzeichnet, dass** der Hohlraum (240) eine im Wesentlichen parallel zur Rückwand (210) verlaufende Wand (230) aufweist und die Waagenelektronik (500) an dieser Wand (230) angeordnet ist.

7. Waage (100) nach einem der vorangehenden Ansprüche, **dadurch gekennzeichnet, dass** sich der Hohlraum (240) über mindestens die Hälfte der horizontalen Erstreckung der Rückwand (210) erstreckt.

8. Waage (100) nach einem der vorangehenden Ansprüche, **dadurch gekennzeichnet, dass** sich der Hohlraum (240) über mindestens die Hälfte der vertikalen Erstreckung der Rückwand (210) erstreckt.

9. Waage (100) nach einem der vorangehenden Ansprüche, **dadurch gekennzeichnet, dass** sich der Hohlraum (240) über die gesamte vertikalen Erstreckung der Rückwand (210) erstreckt.

10. Waage (100) nach einem der vorangehenden Ansprüche, **dadurch gekennzeichnet, dass** die Waage (100) einen oberen Gehäuseteil (250) aufweist und der Hohlraum (240) über diesen oberen Gehäuseteil (250) mit dem Wägeraum (310) verbunden ist.

11. Waage (100) nach einem der vorangehenden Ansprüche, **dadurch gekennzeichnet, dass** zwischen der Waagenelektronik (500) und der Rückwand (210) Abstandhalter (510) angeordnet sind.

12. Waage (100) nach einem der vorangehenden Ansprüche, **dadurch gekennzeichnet, dass** zwischen der Waagenelektronik (500) und dem seitlichen Gehäuseteil (260) Umgebungsluft (555) strömen kann.

13. Waage (100) nach einem der vorangehenden Ansprüche, **dadurch gekennzeichnet, dass** die Waagenelektronik (500) mit einer Anschlussstelle (920) verbunden ist, wobei die Anschlussstelle (920) in einem Winkel *a* von 15° - 75° zur Rückwand (210) angeordnet ist.

14. Waage (100) nach einem der vorangehenden Ansprüche, **dadurch gekennzeichnet, dass die** Waagenelektronik (500) ausserhalb des Hohlraums (240) angeordnet ist.

## Claims

1. Balance (100), comprising a balance housing (200), a balance pan (300), a weighing compartment (310) which contains the balance pan (300), a draft shield (400) which has a fixed rear wall (210) and encloses the weighing compartment (310), a system of balance electronics (500), a weighing cell (600) arranged below the weighing pan (300), and a weighing cell compartment (270) which encases the weighing cell (600), **characterized in that** the weighing cell compartment (270) is atmospherically connected by way of a hollow space (240) to the upper third of the weighing compartment (310), and the balance electronics (500) are arranged at the rear wall (210) outside of the weighing compartment (310).

2. Balance (100) according to claim 1, **characterized in that** the rear wall (210) is constituted by a wall of the hollow space (240).

3. Balance (100) according to one of the preceding claims, **characterized in that** as a means to achieve a thermal separation, the hollow space (240) is arranged between the weighing compartment (310) and the balance electronics (500).

4. Balance (100) according to one of the preceding claims, **characterized in that** the hollow space (240) is arranged in such a way between the balance electronics (500) and the weighing compartment (310) that the air that is present in the hollow space (240) can be heated by the waste heat of the balance electronics (500).

5. Balance (100) according to one of the preceding claims, **characterized in that** those elements of the balance electronics (500) that emit a strong heat radiation are arranged in the upper part of the balance electronics (500).

6. Balance (100) according to one of the preceding claims, **characterized in that** the hollow space (240) has a wall (230) that extends substantially in parallel to the rear wall (210), and that the balance electronics (500) are arranged on said wall (230).

7. Balance (100) according to one of the preceding claims, **characterized in that** the hollow space (240) extends over at least half of the horizontal width of the rear wall (210).

8. Balance (100) according to one of the preceding claims, **characterized in that** the hollow space (240) extends over at least half of the vertical height of the rear wall (210).

9. Balance (100) according to one of the preceding claims, **characterized in that** the hollow space (240) extends over the entire vertical height of the rear wall (210).

10. Balance (100) according to one of the preceding claims, **characterized in that** the balance (100) has an upper housing part (250) and that the hollow space (240) is connected to the weighing compartment (310) by way of said upper housing part (250).

11. Balance (100) according to one of the preceding claims, **characterized in that** spacers (510) are arranged between the balance electronics (500) and the rear wall (210).

12. Balance (100) according to one of the preceding claims, **characterized in that** a stream of ambient air (555) can flow between the balance electronics (500) and the lateral housing part (260).

13. Balance (100) according to one of the preceding claims, **characterized in that** the balance electronics (500) are connected to a connector terminal (920), wherein said connector terminal (920) is arranged at an angle α of 15º to 75º relative to the rear wall (210).

14. Balance (100) according to one of the preceding claims, **characterized in that** the balance electronics (500) are arranged outside of the hollow space (240).

## Revendications

1. Balance (100) comprenant un boîtier de balance (200), un plateau de balance (300), un espace de pesée (310) entourant le plateau de balance (300), un pare-vent (400) entourant l'espace de pesée (310) avec une paroi arrière fixe (210), une électronique de balance (500), une cellule de pesage (600) disposée en dessous du plateau de balance (300) et un espace de cellule (270) entourant la cellule de pesage (600), **caractérisée en ce que**
l'espace de cellule (270) est relié au tiers supérieur de l'espace de pesée (310) par un espace creux (240) de manière perméable aux gaz, et l'électronique de balance (500) est disposée à l'extérieur de l'espace de pesée (310) sur la paroi arrière (210).

2. Balance (100) selon la revendication 1, **caractérisée en ce que** la paroi arrière (210) est formée par une paroi de l'espace creux (240).

3. Balance (100) selon l'une des revendications précédentes, **caractérisée en ce que** pour la séparation thermique, l'espace creux (240) est placé entre l'espace de pesée (310) et l'électronique de balance (500).

4. Balance (100) selon l'une des revendications précédentes, **caractérisée en ce que** l'espace creux (240) est placé de telle façon entre l'électronique de balance (500) et l'espace de pesée (310), que l'air se trouvant dans l'espace creux (240) peut être chauffé par la chaleur dégagée par l'électronique de balance (500).

5. Balance (100) selon l'une des revendications précédentes, **caractérisée en ce que** des éléments de l'électronique de balance (500) dégageant beaucoup de chaleur sont disposés dans la région supérieure de l'électronique de balance (500).

6. Balance (100) selon l'une des revendications précédentes, **caractérisée en ce que** l'espace creux (240) présente une paroi (230) s'étendant essentiellement parallèlement à la paroi arrière (210), et l'électronique de balance (500) est disposée sur cette paroi (230).

7. Balance (100) selon l'une des revendications précédentes, **caractérisée en ce que** l'espace creux (240) s'étend au moins sur la moitié de l'étendue horizontale de la paroi arrière (210).

8. Balance (100) selon l'une des revendications précédentes, **caractérisée en ce que** l'espace creux (240) s'étend au moins sur la moitié de l'étendue verticale de la paroi arrière (210).

9. Balance (100) selon l'une des revendications précédentes, **caractérisée en ce que** l'espace creux (240) s'étend sur toute l'étendue verticale de la paroi arrière (210).

10. Balance (100) selon l'une des revendications précédentes, **caractérisée en ce que** la balance (100) présente une partie de boîtier supérieure (250) et l'espace creux (240) est relié à l'espace de pesée (310) par le biais de cette partie de boîtier supérieure (250).

11. Balance (100) selon l'une des revendications précédentes, **caractérisée en ce que** des espaceurs (510) sont disposés entre l'électronique de balance (500) et la paroi arrière (210).

12. Balance (100) selon l'une des revendications précédentes, **caractérisée en ce que** de l'air ambiant (555) peut circuler entre l'électronique de balance (500) et la partie de boîtier latérale (260).

13. Balance (100) selon l'une des revendications précédentes, **caractérisée en ce que** l'électronique de balance (500) est reliée à un point de raccordement (920), le point de raccordement (920) étant disposé selon un angle α de 15° - 75° par rapport à la paroi arrière (210).

14. Balance (100) selon l'une des revendications précédentes, **caractérisée en ce que** l'électronique de balance (500) est disposée à l'extérieur de l'espace creux (240).
